# EUROPEAN PATENT SPECIFICATION

(11) **EP 1 398 960 B1**
(45) Date of publication and mention of the grant of the patent: **28.06.2006**
(21) Application number: 02292124.1
(22) Date of filing: 28.08.2002
(51) Int. Cl.: H04N 5/44

(54) **Method and device for displaying frozen pictures on video display device**
Verfahren und Einrichtung zur Darstellung von Standbildern auf einer Videoanzeigeeinrichtung
Méthode et appareil pour l'affichage d'images statiques à un dispositif d'affichage vidéo

(43) Date of publication of application: 17.03.2004
(73) Proprietor: Thomson Licensing, 92100 Boulogne-Billancourt (FR)
(72) Inventor: Sirilla, George Andrew, Indianapolis, IN 46237 (US)
(74) Representative: Rumpler, Wolfgang

(56) References cited:
- EP-A- 0 371 678
- EP-A- 1 182 869
- US-A- 5 317 399
- PATENT ABSTRACTS OF JAPAN vol. 1998, no. 10, 31 August 1998 (1998-08-31) & JP 10 136358 A (HITACHI LTD), 22 May 1998 (1998-05-22)
- PATTI A J ET AL: "ROBUST METHODS FOR HIGH-QUALITY STILLS FROM INTERLACED VIDEO IN THEPRESENCE OF DOMINANT MOTION" IEEE TRANSACTIONS ON CIRCUITS AND SYSTEMS FOR VIDEO TECHNOLOGY, IEEE INC. NEW YORK, US, vol. 7, no. 2, 1 April 1997 (1997-04-01), pages 328-342, XP000687651 ISSN: 1051-8215

## Description

The present invention relates to a method of decoding video data, and more particularly, to a method of displaying pictures constructed from progressive or non-progressive video data.

In a cathode-ray tube (CRT) display (e.g., television display), several hundred horizontal lines are scanned from top to bottom and from left to right. In a progressive display, each line is scanned in turn from top to bottom to constitute a frame picture. In an interlaced display, the odd-numbered lines and the even-numbered lines are separately and alternately scanned to constitute a separate field picture.

In a CRT display, for example, a frame picture for a progressive display consists of 480 raster lines and the display rate (or refresh rate) is 30 frames per second. In contrast, a field picture for an interlaced display consists of 240 raster lines and the display rate is 60 fields per second. Most televisions are interlaced display devices, and the raster lines are scanned alternately in two interwoven lines, i.e., all of the odd-numbered lines and all of the even-numbered lines.

In digital television broadcast, a digital video decoder (e.g., a set-top box) is used as a device that enables a television set to become a user interface to a communication channel and also enables a television set to receive and decode digital audio/video data. Such digital video decoder is also required to display frozen pictures as well as normal pictures in the digital television broadcast. For example, when a television viewer changes the channel, the digital video decoder of a television set operates to display a frozen picture while it performs initialization and/or satisfies conditions needed for a transition to steady-state video decode/display.

In an interlaced (or non-progressive) display, a frozen picture is displayed by alternately displaying two field pictures; one for the even-numbered lines and the other for the odd-numbered lines. In this mode, the digital video decoder operates to continuously output these two field pictures to a display unit (e.g., CRT display).

When video data is recorded as field pictures, there is a 1/60 second temporal offset between the adjacent field pictures and a corresponding spatial offset for an object in motion. In case that a frozen picture is constructed with two adjacent field pictures, any motion in the picture results in spatial difference between the two fields of the picture because they are temporally separated by an one-field display period. As a result, when a frozen picture is constructed using two adjacent fields of a picture, areas of motion in the frozen picture displayed will appear to vibrate as the two fields are alternately displayed. The higher the degree of motion, the more noticeable and bothersome the vibration.

EP 0 483 957 A1 teaches capturing first and second sequential fields that define a full frame, determining areas corrupted by relative motion, and substituting values in these areas of one field based upon estimates derived from values of the remaining field. The reference operates to change parts of one of the two fields, and displays each of the fields for one field time period, respectively.

EP 0 371 678 A2 discloses a television receiver provided with two field memories for storing movement control signals , an OR circuit, a frame memory formed in the unit of field, two switches controlled by the freeze signal, a switch controlled by the output of the OR circuit, and a switch for changing over the output signal of the field memory. One frame's worth of video signals of the existing field and the previous field are stored in the frame memory by a freeze signal. The signals provide a freeze picture using the present field and the previous field for the still image portion and the present field for the moving picture portions of the present field and the previous field.

Patent abstracts of Japan vol. 1998, no. 10, 31 August 1998 & JP 10 136358 A (Hitachi Ltd.), 22 May 1998 discloses an image decoder which conducts field freeze processing when flurring in an moving image is a problem and frame freeze is conducted for freeze processing when resolution deterioration is a problem. A value of a progressive frame in a picture header extension in an input stream is used to determine frame freeze or field freeze.

The article by Patti, A. J. et al.: "Robust methods for high-quality stills from interlaced video in the presence of dominant motion", IEEE transactions on circuits and systems for video technology, IEEE Inc. New York, US, vol. 7, no. 2, 1 April 1997, pages 328-342 discloses various algorithms which combine global motion compensation and motion adaptation for de-interlacing in the presence of dominant motion, such as camera zoom, pan or jitter, and local motion, such as object motion. Motion adaptive filtering on global motion compensated images is used to detect and correct those pixels where local motion exists. Dynamic thresholding for motion detection is also disclosed.

US patent 5 317 399 discloses storing successively transmitted images in frame memories for subsequent display. When a user freezes a desired image, the contents of the frame memory storing it continuous to be displayed until a new image is stored in the memory when the freeze mode is released. Display setting data is received and contains information which sets the method of displaying still-picture data that is to be sent.

A need exists for an improved method of constructing frozen pictures which have substantially no vibration or the like in either progressive or non-progressive displays.

In the present invention, the method for constructing a frozen picture include the steps of receiving video data to be spatially and temporally reconstructed in the decoding system; first determining whether a descriptor of the video data for indicating types of source material from which the video data has originated is in error; second determining whether the descriptor indicates progressive or non-progressive; displaying a frame picture of the video data to construct a frozen picture when the descriptor is not in error in the first determining step and the descriptor indicates progressive in the second determining step; and displaying one of field pictures of the video data to construct a frozen picture when the descriptor is in error in the first determining step or the descriptor indicates non-progressive in the second determining step.

When the descriptor indicates non-progressive, the step of displaying one of field pictures may include selecting one of field pictures constituting a picture, and displaying the selected one of the field pictures for a time period to display the field pictures constituting the picture. When the descriptor is in error in the first determining step, the step of displaying one of field pictures may include dividing a frame picture for a progressive display into the fields constituting a picture when the video data has originated from progressive source material, selecting one of the fields, and displaying the selected one of the fields on the display device for a time period to display the frame picture.

### Brief Description of the Drawings

Fig. 1 is a block diagram illustrating a digital video decoder over which the present invention may be implemented;
Fig. 2 is a flow chart for describing a method of constructing a frozen picture according to a first embodiment of the present invention;
Figs. 3A and 3B show a sequence of field pictures and a frame picture reconstructed from two adjacent fields;
Fig. 4 is a flow chart for describing a method of constructing a frozen picture according to a second embodiment of the present invention; and
Figs. 5A and 5B show field pictures for an interlaced display.

In video data compression and decompression, an evolving set of standards are developed by the Moving Pictures Experts Group (MPEG). They are referred to as MPEG standards. For the digital television broadcast, a typical digital video decoder (incorporated within a set-top box, for example) contains an MPEG video decoder chip besides one or more microprocessors for running the operating system.

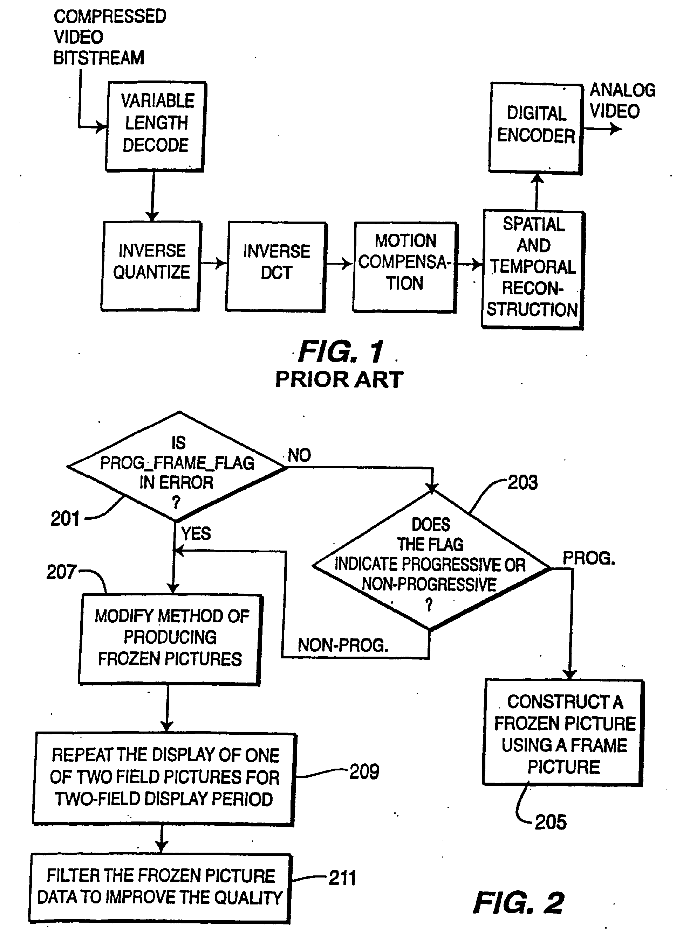

Fig. 1 is a block diagram illustrating a digital video decoder compliant with the MPEG standards and over which the principles of the present invention may be practiced. In the digital video decoder, a video bitstream compressed by an encoder is converted into an analog video signal through various processes such as variable length decoding, inverse quantization, inverse discrete cosine transform (IDCT), motion compensation, spatial and temporal reconstruction, and video output encoding.

Of the various processes of decoding the compressed video bitstream, the present invention is pertinent to the spatial and temporal reconstruction process. The variable length decoding, inverse quantization, IDCT, motion compensation, and digital encoding of the digital video decoder in Fig. 1 are well known in this art, thus a detailed description thereof is omitted.

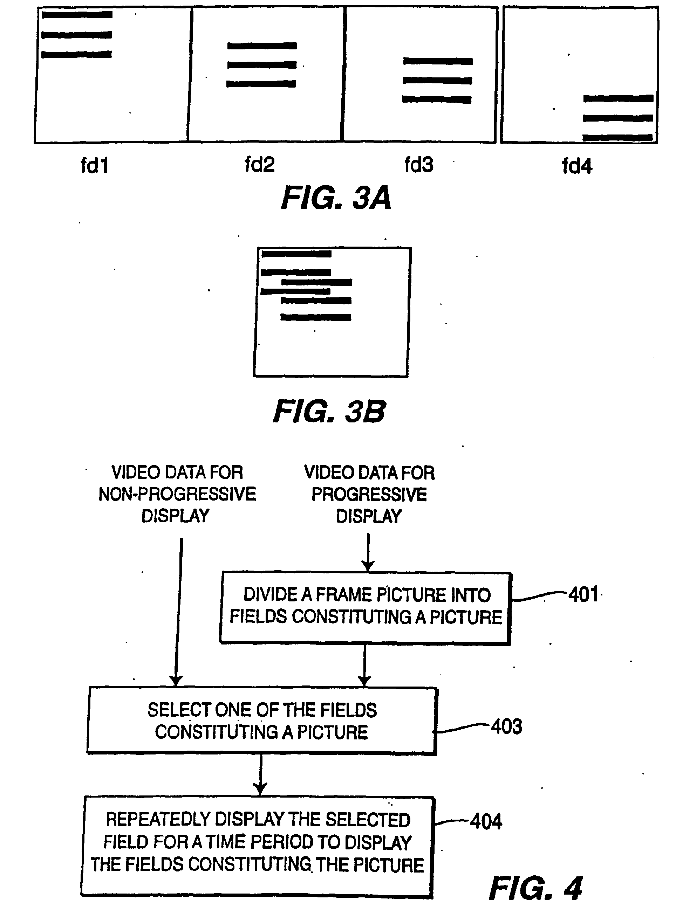

The spatial and temporal reconstruction of digital video data, in accordance with the principles of the present invention, includes the processing of picture information relating to field and frame pictures and may further include vertical and horizontal scaling and filtering. The spatial and temporal reconstruction, in accordance with the principles of the present invention, are described in greater detail in conjunction with the description pertaining to Figs. 2 through 4.

Encoded video data can be decoded as frame pictures for a progressive display or as field pictures for a non-progressive (or, interlaced) display. In case of video data compliant with the MPEG standards, a video data syntax provides a descriptor called "progressive_frame_flag" to indicate which method (i.e., progressive or non-progressive) was used in the encoding process. In other words, the descriptor in a video data syntax is used for indicating types of source material from which the video data to be decoded has originated.

Referring to Fig. 2, a flow chart is provided for describing the method of constructing frozen pictures, in accordance with the principles of the present invention. Assuming that the validity (or trustworthiness) of a descriptor in video data to be decoded is known, it is first determined whether the descriptor (e.g., progressive_frame_flag) may be in error based on the validity (step 201).

When it is determined that the descriptor is not in error, it is then determined whether the descriptor indicates "progressive" or "non-progressive" (step 203). It should be noted that the determination of whether the descriptor indicates progressive or non-progressive may be performed prior to the determination of whether the descriptor may be in error.

In case that the descriptor indicates "progressive" (i.e., the encoded video data has originated from progressive source material), a frozen picture is constructed using a pertinent frame picture of video data to be decoded (step 205). To display a frozen picture, the video decoder outputs the frame picture to a display device for a frame display period, i.e., a time period for displaying a frame picture in a progressive display. '

When the descriptor indicates "non-progressive" in step 203 or when the descriptor may be in error in step 201, it is necessary to modify the method of constructing frozen pictures (step 207). In this case, a frozen picture needs to be reconstructed with one of two fields constituting a picture in a non-progressive display.

Fig. 3A, for example, depicts a sequence of four field pictures fd1, fd2, fd3, fd4 of an object in motion for an interlaced display. In this case, if a frozen picture is constructed with two adjacent fields, the object will appear to jump between the two field positions as shown in Fig. 3B. This may result in vibration or flicker in the frozen picture.

According to the method of constructing frozen pictures in the present invention, a frozen picture is constructed by displaying one field picture for a two-field display period, i.e., a time period for displaying two field pictures in a non-progressive display. Referring to Fig. 2 and 3A, a frozen picture is constructed by repeatedly displaying one of the field pictures fd1 and fd2 for the time period of displaying both the field pictures fd1 and fd2 (step 209). This method may eliminate any vibration or the like in the frozen picture.

Upon constructing a frozen picture, video data of the frozen picture may be filtered to improve display quality of the picture (step 211). The filtering may be accomplished by performing weighted interpolation with respect to video data of vertically adjacent field pictures.

In the above-described embodiment of the present invention, constructing a frozen picture requires the determination of whether a descriptor is in error and/or whether a descriptor indicates progressive or non-progressive. In another embodiment not claimed herein, however, a frozen picture may be constructed without such determination. This is described below.

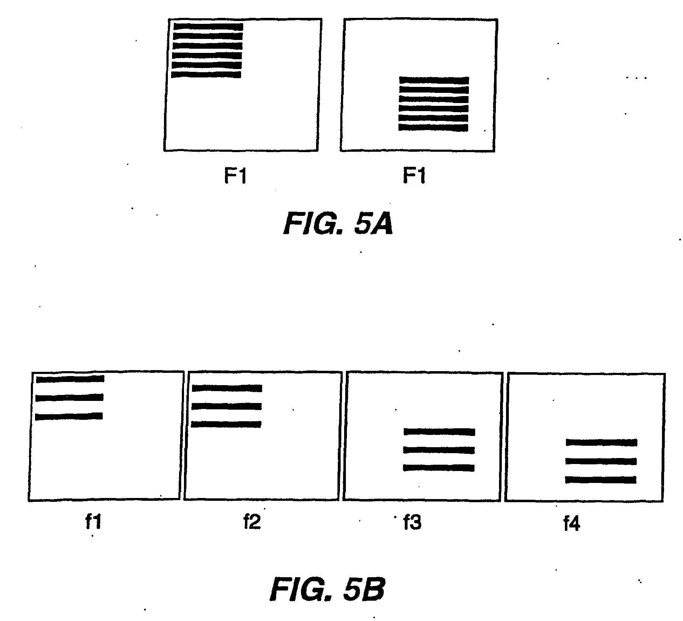

Referring to Fig. 4, a frozen picture is constructed using one field picture in both the progressive and non-progressive display modes. In a non-progressive display, a frozen picture is constructed using the same method as in the first embodiment shown in Fig. 2. In case of an interlaced display, one of the two fields (referring to Fig. 3A) is selected (step 403), and the selected field is repeatedly displayed for the two-field display period (step 404).

In a progressive display, a frozen picture is constructed using one of the two fields split from a frame picture (step 401). In this case, one of the two fields is selected (step 403) and the selected field is repeatedly displayed for the frame display period (step 404).

Referring to Figs. 5A and 5B, one frame picture for a progressive display may be split into two field pictures. For example, frame F1 is split into fields f1 and f2, and frame F2 is split into fields f3 and f4.

In this embodiment, a frozen picture is constructed by repeatedly displaying one of two adjacent fields for the frame display period or the time period for displaying both the adjacent fields. For example, a frozen picture is constructed by repeatedly displaying field f1 for a time period to display frame F1 or both the fields f1 and f2. This is possible because the display of a frozen picture is short and temporary enough to ignore whether the source material to be decoded is progressive or non-progressive. By constructing a frozen picture using this method, any vibration or the like may be eliminated from the frozen picture.

The specific details of implementation is merely a design choice for each embodiment chosen, and may vary depending on the architecture of the decoder, costs of implementing, reliability, etc. It will thus be appreciated that those skilled in the art will be able to devise various arrangements which, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that any of the processes, acts, and steps described herein represent various processes which may be substantially represented in computer readable medium and so executed by a computer or processor, whether or not such computer or processor is explicitly shown.

The functions of the various elements shown in the Figs. 1, 2 and 4 may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

## Claims

1. A method for constructing a frozen picture to be displayed on a display device in a video data decoding system, the method comprising the steps of:
receiving video data to be spatially and temporally reconstructed in the decoding system, the video data including fields constituting a picture to be displayed on the display device, said method being further **characterized by** the steps of:
first determining whether a descriptor of the video data for indicating types of source material from which the video data has originated is in error (201);
second determining whether the descriptor indicates progressive or non-progressive (203) video data;
sending a frame picture of the video data to the display, for constructing a frozen picture when the descriptor is not in error in the first determining step and the descriptor indicates progressive in the second determining step (205); and
sending one of a plurality of field pictures of the video data to the display, for constructing a frozen picture when the descriptor is in error in the first determining step or the descriptor indicates non-progressive in the second determining step (209).

2. The method of claim 1, **characterized in that** the receiving video data step includes dividing a frame picture into fields constituting a picture when the video data has originated from progressive source material (401).

3. The method of claim 1, **characterized in that** the video data is compliant with the MPEG standards.

4. The method of claim 3, **characterized in that** the descriptor includes a flag for indicating progressive or non-progressive.

5. The method of claim 1, **characterized in that** when the descriptor indicates non-progressive in the second determining step, the step of sending one of the plurality of field pictures includes steps of:
selecting one of a plurality of field pictures constituting a picture (403); and
sending the selected one of the field pictures for a time period to display the field pictures constituting the picture (404).

6. The method of claim 5, **characterized in that** the field pictures are two field pictures for an interlaced display, one of the two field pictures being for even-numbered raster lines of the picture and the other for odd-numbered raster lines of the picture.

7. The method of claim 1, **characterized in that** when the descriptor is in error in the first determining step, the step of displaying one of field pictures includes the steps of:
dividing a frame picture for a progressive display into the fields constituting a picture when the video data has originated from progressive source material;
selecting one of the fields (403); and
sending the selected one of the fields to the display device for a time period to display the frame picture (404).

8. The method of claim 7, **characterized in that** the fields divided from the frame picture are two fields, one for even-numbered raster lines of the frame picture and the other for odd-numbered raster lines of the frame picture.

9. The method of claim 1, **characterized in that** when the descriptor is in error in the first determining step, the step of sending the selected one of the fields includes the steps of:
selecting one of fields constituting a picture in a non-progressive display (403); and
sending the selected one of the fields to the display device for a time period to display the fields constituting the picture (404).

10. The method of claim 9, **characterized in that** the fileds are two field pictures for an interlaced display, the two field pictures being one of even-numbered raster lines of the picture and the other for odd-numbered raster lines of the picture.

11. The method of claim 1, further **characterized by** filtering video data of the selected one of the fields to improve quality of the frozen picture (211)

12. An apparatus for constructing a frozen picture to be displayed on a display device in a video data decoding system, the apparatus comprising:
means for receiving video data to be spatially and temporally reconstructed in the decoding system, the video data including fields constituting a picture to be displayed on the display device; said apparatus being **characterized by**:
first means for determining whether a descriptor of the video data for indicating types of source material from which the video data has originated is in error (201);
second means for determining whether the descriptor indicates progressive or non-progressive (203) video data;
means for sending a frame picture oftne video data to the display, for constructing a frozen picture when the descriptor is not in error in the first determining means and the descriptor indicates progressive in the second determining means (205); and
means for sending one of a plurality of field pictures of the video data to the display, for constructing a frozen picture when the descriptor is in error in the first determining means or the descriptor indicates non-progressive in the second determining means (209).

## Patentansprüche

1. Verfahren zum Aufbau eines Standbildes, das auf einer Anzeigevorrichtung in einem Videodaten-Dekodiersystem angezeigt werden soll, umfassend die Schritte:
Empfangen von Videodaten, die in dem Dekodiersystem räumlich und zeitlich rekonstruiert werden sollen, wobei die Videodaten Halbbilder enthalten, die ein auf der Anzeigevorrichtung anzuzeigendes Bild darstellen, wobei das Verfahren ferner durch die Schritte **gekennzeichnet** ist:
Erstens Bestimmen, ob ein Deskriptor der Videodaten zur Anzeige von Typen von Quellenmaterial, aus dem die Videodaten hervorgegangen sind, im Irrtum ist (201); zweitens Bestimmen, ob der Deskriptor progressive oder nicht-progressive Videodaten anzeigt (203);
Senden eines Vollbildes der Videodaten an die Anzeige, um ein Standbild aufzubauen, wenn der Deskriptor in dem ersten Bestimmungsschritt nicht im Irrtum ist und der Deskriptor in dem zweiten Bestimmungsschritt progressiv anzeigt (205); und
Senden eines von mehreren Halbbildern der Videodaten an die Anzeige, um ein Standbild aufzubauen, wenn der Deskriptor in dem ersten Bestimmungsschritt im Irrtum ist oder der Deskriptor in dem zweiten Bestimmungsschritt nicht-progressiv anzeigt (209).

2. Verfahren nach Anspruch 1, **dadurch gekennzeichnet, dass** der Schritt des Videodaten-Empfangs das Teilen eines Vollbildes in Halbbilder enthält, die ein Vollbild bilden, wenn die Videodaten aus progressivem Quellenmaterial stammen (401).

3. Verfahren nach Anspruch 1, **dadurch gekennzeichnet, dass** die Videodaten im Einklang mit den MPEG-Normen sind.

4. Verfahren nach Anspruch 3, **dadurch gekennzeichnet, dass** der Deskriptor ein Kennzeichen enthält, um progressiv oder nicht-progressiv anzuzeigen.

5. Verfahren nach Anspruch 1, **dadurch gekennzeichnet, dass**, wenn der Deskriptor in dem zweiten Bestimmungsschritt nicht-progressiv anzeigt, der Schritt des Sendens eines von mehreren Halbbildern die Schritte enthält:
Auswählen eines von mehreren Halbbildern, die ein Vollbild darstellen (403) und Senden das eine ausgewählte Halbbild für eine Zeitdauer, um die das Vollbild bildenden Halbbilder anzuzeigen (404).

6. Verfahren nach Anspruch 5, **dadurch gekennzeichnet, dass** die Halbbilder zwei Halbbilder für eine Zeilensprung-Anzeige sind, wobei eines der beiden Halbbilder die geradzahligen Rasterzeilen des Bildes und das andere die ungeradzahligen Rasterzeilen des Bildes darstellt.

7. Verfahren nach Anspruch 1, **dadurch gekennzeichnet, dass**, wenn der Deskriptor im ersten Bestimmungsschritt im Irrtum ist, der Schritt der Anzeige eines der Halbbilder die Schritte enthält:
Teilen eines Vollbildes für eine progressive Anzeige in die ein Vollbild bildenden Halbbilder, wenn die Videodaten aus progressivem Quellenmaterial stammen;
Auswählen eines der Halbbilder (403); und
Senden des einen ausgewählten Halbbildes an die Anzeigevorrichtung für eine Zeitdauer, um das Vollbild anzuzeigen (404).

8. Verfahren nach Anspruch 7, **dadurch gekennzeichnet, dass** die beiden aus dem Vollbild geteilten Halbbilder zwei Halbbilder sind, eines für die geradzahligen Rasterzeilen des Vollbildes und das andere für die ungeradzahligen Rasterzeilen des Vollbildes.

9. Verfahren nach Anspruch 1, **dadurch gekennzeichnet, dass**, wenn der Diskriptor bei dem ersten Bestimmungsschritt im Irrtum ist, der Schritt des Sendens der ausgewählten Halbbilder die Schritte enthält:
Auswählen eines von Halbbildern, die in einer nichtprogressiven Anzeige ein Vollbild bilden (403); und Senden des ausgewählten Halbbildes an die Anzeigevorrichtung für eine Zeitdauer, um die das Vollbild bildenden Halbbilder anzuzeigen (404).

10. Verfahren nach Anspruch 9, **dadurch gekennzeichnet, dass** die Halbbilder zwei Halbbilder für eine Zeilensprung-Anzeige sind, wobei eines aus den geradzahligen Rasterzeilen und das andere aus den ungeradzahligen Rasterzeilen des Bildes besteht.

11. Verfahren nach Anspruch 1, **gekennzeichnet durch** Filterung der Videodaten des einen ausgewählten Halbbildes, um die Qualität des Standbildes zu verbessern (211).

12. Gerät zum Aufbau eines Standbildes, das auf einer Anzeigevorrichtung in einem Videodaten-Dekodier-System angezeigt werden soll, umfassend:
Mittel zum Empfangen von Videodaten, die in demDekodiersystem räumlich und zeitlich rekonstruiert werden sollen, wobei die Videodaten Halbbilder enthalten, die ein auf einer Anzeigevorrichtung anzuzeigendes Bild darstellen, wobei das Gerät **gekennzeichnet ist durch**:
Erste Mittel zur Bestimmung, ob ein Deskriptor der Videodaten zur Anzeige von Typen von Quellenmaterial, aus dem die Videodaten hervorgegangen sind, im Irrtum ist (201);
Zweite Mittel zur Bestimmung, ob der Deskriptor progressive oder nicht-progressive Videodaten anzeigt (203);
Mittel zum Senden eines Vollbildes der Videodaten an die Anzeige, um ein Standbild aufzubauen, wenn der Deskriptor in den ersten Bestimmungsmitteln nicht im Irrtum ist und der Deskriptor in den zweiten Bestimmungsmsitteln progressiv anzeigt (205); und
Mittel zum Senden eines aus einer Mehrzahl von Halbbildern der Videodaten an die Anzeige, um ein Standbild aufzubauen, wenn der Deskriptor in den ersten Bestimmungsmitteln im Irrtum ist oder der Deskriptor in den zweiten Bestimmungsmitteln nicht-progressiv anzeigt (209).

## Revendications

1. Un procédé de construction d'une image statique à afficher sur un dispositif d'affichage dans un système de décodage de données vidéo, le procédé comprenant les étapes consistant à:
recevoir des données vidéo à reconstruire dans l'espace et dans le temps dans le système de décodage, les données vidéo incluant des champs constituant une image à afficher sur le dispositif d'affichage, ledit procédé étant en outre **caractérisé par** les étapes consistant à :
déterminer en premier lieu si un descripteur des données vidéo permettant d'indiquer des types de matériaux source à partir desquels les données proviennent est en erreur (201) ;
déterminer ensuite si le descripteur indique des données vidéo progressives ou non progressives (203) ;
envoyer une image entrelacée des données vidéo vers l'affichage, afin de construire une image statique lorsque le descripteur n'est pas en erreur lors de la première étape de détermination et que le descripteur indique progressif lors de la seconde étape de détermination (205) ; et
envoyer une image monotrame parmi une pluralité d'images monotrames des données vidéo vers l'affichage, pour construire une image statique lorsque le descripteur est en erreur lors de la première étape de détermination ou que le descripteur indique non progressif lors de la seconde étape de détermination (209).

2. Le procédé de la revendication 1, **caractérisé en ce que** l'étape de réception des données vidéo inclut la division d'une image entrelacée en champs constituant une image lorsque les données vidéo proviennent d'un matériau source progressif (401).

3. Le procédé de la revendication 1, **caractérisé en ce que** les données vidéo sont compatibles avec les normes MPEG.

4. Le procédé de la revendication 3, **caractérisé en ce que** le descripteur inclut un indicateur pour indiquer progressif ou non progressif.

5. Le procédé de la revendication 1, **caractérisé en ce que** lorsque le descripteur indique non progressif lors de la seconde étape de détermination, l'étape d'envoi d'une image monotrame parmi une pluralité d'images monotrames inclut les étapes consistant à :
sélectionner une image monotrame parmi une pluralité d'images monotrames constituant une image (403) ; et
envoyer l'image monotrame sélectionnée parmi les images monotrames pendant une période pour afficher les images monotrames constituant l'image (404).

6. Le procédé de la revendication 5, **caractérisé en ce que** les images monotrames sont deux images monotrames pour un affichage entrelacé, l'une des deux images monotrames concernant des lignes de balayage paires de l'image et l'autre concernant des lignes de balayage impaires de l'image.

7. Le procédé de la revendication 1, **caractérisé en ce que** lorsque le descripteur est en erreur lors de la première étape de détermination, l'étape d'affichage d'une des images monotrames inclut les étapes consistant à :
diviser une image entrelacée en champs constituant une image lorsque les données vidéo proviennent d'un matériau source progressif ;
sélectionner l'un des champs (403) ; et
envoyer le champ sélectionné parmi les champs vers le dispositif d'affichage pendant une période pour afficher l'image monotrame (404).

8. Le procédé de la revendication 7, **caractérisé en ce que** les champs divisés à partir de l'image monotrame sont deux champs, l'un concernant des lignes de balayage paires de l'image entrelacée et l'autre concernant des lignes de balayage impaires de l'image entrelacée.

9. Le procédé de la revendication 1, **caractérisé en ce que** lorsque le descripteur est en erreur lors de la première étape de détermination, l'étape d'envoi du champ sélectionné parmi les champs inclut les étapes consistant à :
sélectionner l'un des champs constituant une image dans un affichage non progressif (403) ; et
envoyer le champ sélectionné parmi les champs vers le dispositif d'affichage pendant une période pour afficher les champs constituant l'image (404).

10. Le procédé de la revendication 9, **caractérisé en ce que** les champs sont deux images monotrames pour un affichage entrelacé, les deux images monotrames concernant pour l'une des lignes de balayage paires de l'image et pour l'autre des lignes de balayage impaires de l'image.

11. Le procédé de la revendication 1, **caractérisé en outre par** le filtrage de données vidéo du champ sélectionné parmi les champs pour améliorer la qualité de l'image statique (211).

12. Un appareil pour construire une image statique à afficher sur un dispositif d'affichage dans un système de décodage de données vidéo, l'appareil comprenant :
un moyen pour recevoir des données vidéo à reconstruire dans l'espace et dans le temps dans le système de décodage, les données vidéo incluant des champs constituant une image à afficher sur le dispositif d'affichage ; ledit appareil étant **caractérisé par** :
un premier moyen pour déterminer si un descripteur des données vidéo permettant d'indiquer des types de matériaux source à partir desquels les données proviennent est en erreur (201) ;
un second moyen pour déterminer si le descripteur indique des données vidéo progressives ou non progressives (203) ;
un moyen pour envoyer une image entrelacée des données vidéo vers l'affichage, afin de construire une image statique lorsque le descripteur n'est pas en erreur dans le premier moyen de détermination et que le descripteur indique progressif dans le second moyen de détermination (205) ; et
un moyen pour envoyer une image monotrame parmi une pluralité d'images monotrames des données vidéo vers l'affichage, pour construire une image statique lorsque le descripteur est en erreur dans le premier moyen de détermination ou que le descripteur indique non progressif dans le second moyen de détermination (209).
